# EUROPEAN PATENT APPLICATION

(11) **EP 4 231 476 A1**
(43) Date of publication of application: **23.08.2023**
(21) Application number: 22382141.4
(22) Date of filing: 18.02.2022
(51) Int. Cl.: H02J 3/00, H02J 3/38, H02J 3/48

(54) **METHOD OF POWER MANAGEMENT OF A HYBRID POWER PLANT**

(71) Applicant: Siemens Gamesa Renewable Energy Innovation & Technology S.L., 31621 Sarriguren (Navarra) (ES)
(72) Inventor: The designation of the inventor has not yet been filed
(74) Representative: SGRE-Association

(57) **Abstract**

Method of power management of a hybrid power plant (100), wherein the method comprises:
determining a power generation schedule (208) defining a power generation of the power plant (100) during a predefined time range on the basis of forecasts parameters (205);
providing a power injection schedule and capacities for reserves and regulation services (209) defining a power injection of the power plant (100) during the predefined time range to a controller of the grid (141), wherein the power injection schedule (210) is determined on the basis of the power generation schedule (208) and of at least one further forecast parameter (205);
receiving a committed power injection schedule and capacities for reserves and regulation services (210) from the controller of the grid and/or market (141);
wherein in the predefined time range the method comprises:
supplying the power of the power plant (100) to the point of connection (101) on the basis of the committed power injection schedule (210) and
controlling the power of the power plant (100) supplied to the point of connection (101) in real time on the basis of input signals received from the controller of the grid (141) and of at least one optimization parameter.

## Description

### Field of invention

The present invention relates to a method of power management for a power plant comprising at least one type of renewable energy generation equipment and an energy storage system.

### Art Background

Hybrid power plants comprising renewable power generation equipment, such as wind turbines, lack predictability and dispatchability of power supply due to the ever changing weather conditions. This lack causes difficulties in integrating power plants with renewable power generation equipment in traditional electrical grids and markets, as the controllers of the grids, as well as users, demand a certain stability in the power supply through power injection schedules, which are defined beforehand and which must be maintained over a specified (predefined) time range to keep the grid's power generation and demand balance. The controller of a grid or a user might also request the availability of certain power reserves, which must be provided in the predefined time range to help keeping the grid's power balance considering real time condition variations.

In the prior art, predictability and dispatchability for renewable power plants is achieved by using energy storage systems, which are capable of storing and discharging energy at a fast rate, thus making the hybrid power plant able of achieving market related functionalities in terms of predictability and dispatchability of power supply. Specialized energy management systems (also referred to EMS), based on predictive optimization algorithms and controls, are needed in order to correctly manage and control the energy and power dispatch of the plant to the electrical grid.

The integration and the usage of forecasting services, for considering weather, financial or plant-related conditions and, in such a way, predict the dispatchable power during a predefined time range, is known form the prior art.

Nevertheless, both the use of energy storage systems and the use of forecasts services of the prior art is not connected with the use of algorithms, or methods, capable of optimizing the profitability of the plant in the energy and reserves market participation and/or the lifetime of the energy storage system, while also being able to dispatch the committed power during the predefined time range.

The lack of predictability and of dispatchability also reflects on the capabilities of the hybrid power plant to respond to signals received from a controller of the grid, which are limited due to the storage capacities.

There may therefore be the need for a method capable of dispatching the committed power, while considering other optimization factors, such as the capability of reliably responding to signals received from the operator of the grid requesting a change in the supplied power.

### Summary of the Invention

This need may be met by the subject matter according to the independent claims. Advantageous embodiments of the present invention are described by the dependent claims.

According to a first aspect of the present invention, a method of power management of a hybrid power plant comprising at least one type of renewable power generation equipment and an energy storage system, wherein the power plant comprises at least one point of connection with an electrical grid is provided. A first step of the method comprises determining an optimized power generation schedule defining a power generation of the renewable power generation equipment during a predefined time range on the basis of forecasts parameters, as well as. The power generation schedule also defines an optimized storage capacity reserves of the energy storage system defining an amount of available power from the energy storage system during the predefined time range. A second step comprises providing an optimized power injection schedule and available capacities for reserve and regulation services defining a power injection of the power plant during the predefined time range to a controller of the grid and/or market. The power injection schedule and the available capacities for reserve and regulation services are determined on the basis of the power generation schedule and of at least one further forecast parameter. A third step comprises receiving a committed power injection schedule from the controller of the grid and/or market on the basis of the power injection schedule, as well as a committed energy reserve and/or storage capacity to be provided for real time balancing services. During the predefined time range, the method comprises supplying the power of the power plant to the point of connection on the basis of the committed power injection schedule and controlling in real time the power of the power plant supplied to the point of connection on the basis of input signals received from the controller of the grid and/or market, such as regulation instructions based on the offered and committed regulation capacities, as well as mandatory grid operations, and of at least one optimization parameter.

In the present application, a power plant including at least one type of renewable energy generation equipment and an energy storage system is known as hybrid power plant. The hybrid power plant comprises at least one point of connection. A point of connection is a shared electrical connection point between at least one of the renewable power generation equipment and the energy storage system and the electrical grid to which the hybrid power plant is connected. The point of connection also refers to the point where the commitments and power injection requirements are established and monitored.

In the present application, the terms "hybrid power plant" and "power plant" are used interchangeably for each other.

The energy storage system may for example comprise one or more batteries or accumulators which may store electric energy in form of chemical energy and/or mechanical energy. The renewable power generation equipment may comprise or may not comprise a converter, for example to convert a DC voltage (for example of a battery or an accumulator or a photovoltaic cell) to an AC voltage having a frequency for example corresponding to a nominal frequency (for example 50 Hz or 60 Hz) of an electrical utility grid or and offgrid connection to a specific user or independent network. An energy storage system comprising only batteries is defined as battery energy storage system, also known as BESS.

In the present application, forecasts parameters are data and/or pieces of information that are being used to determine a power generation schedule, as well as storage power and charging schedules during a predefined time range. In particular, forecasts parameters are data and/or pieces of information relating to a scenario and/or a situation during the predefined time range. For example, the forecasts parameters provide information about the weather conditions in the region of the power plant during the predefined time range. The forecast parameters are therefore external constraints which influence the operation of the power plant, in particular the power generation from the renewable power generation equipment and the required power flow to and from the storage resources.

In the present application, the power generation schedule is defined as the power that is expected to be generated by the renewable energy generation equipment during the predefined time. For example, the power generation schedule takes into account the amount of power that can be produced by wind turbines belonging to the power plant during the predefined time range. The power generation schedule is optimized in such a way that forecasts parameters are considered when determining the power injection schedule.

According to an embodiment, the power generation schedule is optimized by taking into consideration the state of charge of the energy storage system.

In the present application, a state of charge of the energy storage system is a value representing the amount of the available energy of the energy storage system. This value can be represented as a percentage of the total possible energy capacity of the storage resource, for example 80%, or as a physical value, for example in terms of Ampere-hours (Ah) or the like.

The power injection schedule is defined as the power to be supplied by the power plant to the point of connection during the predefined time range. The supplied power is composed by the power to be generated by the renewable power generation equipment and/or by the power provided by the energy storage system. The power injection schedule also allows determining the available capacities for reserve and regulation services.

In the present application, reserve and regulation services are defined as the capacities to provide power injections or absorptions to/from the electrical grid for assuring supply and frequency stability within the electrical grid on the basis of signals received from the controller of the grid or according to preestablished conditions measured locally at the power plant like, for example, a grid's frequency threshold value.

In the present application, a trader is a third person or entity which makes transactions with electricity market. This trader could also be the same owner of plant. The trader can provide power injection schedules including energy reserves to a controller of the grid and/or market and, in the same way, communicate the committed schedules and reserves for reserve and regulation services to the power plant.

In the present application, the controller of the grid and/or market, also known as the grid operator, is in charge of operating the electrical grid. The controller of the grid and/or market has to guarantee the balance between generated and consumed power to achieve the system's frequency stability. To this end, it communicates with the trader to commit power injection schedules. Controller of the grid and controller of the market are used as equivalent terms in the present application.

A committed power injection schedule is a power injection schedule received from a controller of the grid. The committed power injection schedule obliges the power plant to supply and/or to absorb a predetermined amount of power to the point of connection during the predefined time range. The committed power injection schedule represents therefore a minimum of the power that must be supplied or absorbed from the power plant to the point of connection during the predefined time range. The committed power injection schedule can also have an upper limit, representing a maximum power that can be supplied to the point of connection during the predefined time range. Such upper limit might be equal or might be greater than the value established in the committed power injection schedule. If the committed power injection schedule has an upper limit, then it is said to be "bounded". If it has no upper limit, then it is said to be "unbounded".

With the committed power injection schedule, capacity commitments are also offered and awarded through market bids and negotiations for reserve and regulation services. The committed capacities refer to power and energy capacities which are reserved for providing a power injection (or demand) increase or reduction when requested by the grid/market operator. If it regards the regulation services, also referred to as regulation market, then the committed capacity refers to the maximum constant power that the power plant can guarantee over the predefined time range. If it regards the reserve services, also referred to as reserve market, the committed capacity represents the energy that the power plant can absorb or inject during the predefined time range for stabilizing the electrical grid against variations in the power supply and consumption. Contrary to the regulation reserves, whose energy commitment is equal to the maximum power commitment agreed upon during the entire time interval, these reserves are energy (or storage) capacities to be maintained for longer time spans (a daily reserve for example). The controller of the grid will call for the necessary power injections according to the committed capacities by sending the required power setpoints to the plant.

When there is a committed capacity on the reserve and/or the regulation market, then the controller of the grid has reserved (purchased) this capacity to inject or absorb power to or from the electrical grid. In this case, it is possible that a certain capacity of the energy storage system is reserved for this. Although the names may vary, a committed capacity on the reserve market is typically called "spinning reserve" if it is directed towards injecting power and "demand response" if it is directed towards absorbing power. In a similar way, the capacity commitments in the regulation markets are typically known as "regulation up" if it is directed towards injecting power and "regulation down" if it is directed towards absorbing power or reducing the power injection regarding a previously committed power injection schedule. Within this document, regardless of the specific market where these capacities are offered (reserves or regulation), the term "reg up request" refers to a power injection increase request from the controller of the grid, and "reg down request" refers to a power reduction or demand request from the controller of the grid.

The input signals received from the controller of the grid are signals relating to a change in the conditions according to which the power must be supplied or absorbed to or from the electrical grid. The signals may comprise, for example, a request to supply more or less power, a request to build up storage capacity for a second predefined time range or a request to buy (absorb) energy from the electrical grid, whereby the above listed examples are not limiting.

In the present application, an optimization parameter is a parameter for improving or optimizing the performance of the power plant. Optimization parameters are, for example, power curtailment and the lifetime of the energy storage system. The optimization parameter may also be, for example, a state of charge of the energy storage system which is desired in order to offer a specific amount of stored energy and/or storage capacity into the reserves and regulation markets.

According to the first aspect of the present invention, it is therefore foreseen that the power plant is managed, during the predefined time range, to provide a committed power injection schedule and available capacity for reserves and regulation services, which has been requested from the controller of the grid, while, in the same time, optimizing the usage of the power plant itself by, for example, reducing the power curtailment or the usage of the energy storage system.

According to an embodiment, during the predefined time range, the controlling of the power of the power plant supplied to the point of connection comprises controlling the composition of the power supplied to the point of connection, by changing the quantity of the power supplied from the energy storage system and/or from the renewable power generation resources. In this particular embodiment, the method is therefore directed to adapt the composition of the power supplied to the point of connection on the base of the previously committed power injection schedule and the committed capacities for reserve and regulation services.

According to an embodiment, the optimization parameter is one of the lifetime of the energy storage system, the power curtailment or the state of charge of the energy storage system.

In the present application, power curtailment is power available in the renewable resource that cannot be injected to the electrical grid without violating the constraints imposed by the controller of the grid, either in the committed power injection schedule or in one or more input signals, and which cannot be used to charge the energy storage system, without violating the conditions imposed by the at least one optimization parameter or the constraints imposed by the energy storage system itself, for example when the energy storage system is fully loaded an thus unable to store more energy, or if it has reached a maximum desired state of charge.

According to an embodiment, the input signal from the controller of the grid is a request for a power supply increase. This request is called "reg up request". In this case, the controller of the grid is requesting a ramp up in the power provided by the power plant. The increase in the power supply may be provided by the energy storage system, which is discharged. Moreover, if the plant is currently absorbing energy, the "reg up request" can also be performed by reducing the amount of power being absorbed from the grid.

According to an embodiment, during the "reg up request" the state of charge of the energy storage system may also increase. This is the case when the power generated by the renewable power generation equipment is sufficient to cope with the increase requested in the power supply and still generates power which, instead of being curtailed, is used to charge the energy storage system.

According to an embodiment, it is possible that the input signal from the controller of the grid is a request for a power supply decrease. This request is called "reg down request". In this case, the power plant must therefore reduce the quantity of power supplied to the point of connection. This might be achieved by diverting power generated by the renewable power generation equipment to the energy storage system or, if unavoidable by curtailing the power available from the renewable power generation resource. Moreover, if the plant is currently absorbing energy, the "reg down request" can also be performed by increasing the amount of power being absorbed from the grid.

Alternatively, it is also possible that, during the power supply decrease, the state of charge of the energy storage system may also decrease. This is the case when, for example, a power injection schedule has been committed by the plant and, due to resource predictability reasons, there is not enough power to achieve the power injection, thus the energy storage system is discharged to achieve it. If the supply according to the committed power injection schedule must be met, even when reducing it, then the energy storage system could be discharging during the power supply decrease.

Both for the case in which the input signal consists in a request for a power increase or decrease, the controller of the grid sends a power setpoint with the request of more or less power that must be injected.

In both cases it is therefore possible to react to a request of the controller of the grid for providing more or less power than the one committed in the committed power injection schedule, thus reaching a financial optimization of the power plant, by obtaining revenues from three sources: for providing power according to the power injection schedule previously agreed in the electricity market, for the committed capacities made available in the reserves and regulation markets (whether used or not), and for the energy effectively transferred while regulating the power supply on the basis of the requests presented by the controller of the grid.

According to an embodiment, it is possible that the power injection schedule is updated, during the predefined time range on the base of updated forecasts parameters. It is therefore possible to proactively react to a change in the boundary conditions for the power generation and injection, such as a change in the weather conditions.

For example, it is possible to provide and commit a power injection schedule one day before the predefined time range on the base of forecasts parameters available 24 hours before the predefined time range (day ahead programming). Such a committed power injection schedule does not however take care of the conditions actually present at the time of the power injection, whereas it is possible to provide a new power injection schedule during the predefined time range to the controller of the grid and thus to receive an updated power injection schedule and, if allowed by the market, the capacities offered for reserves and regulations may also be recalculated, offered and committed again.

The update can be performed as often as convenient in both a constant time interval, such as every 5 minutes, or a non-constant time interval, so that the update is performed only when the boundary conditions are changing.

According to another embodiment, a second power injection at a time closer to the predefined time range than the first committed power injection schedule is provided to the controller of the grid, on the base of updated forecasts parameters.

Depending on the market's characteristics and available bidding sessions, it is for example possible to commit a first power injection schedule one day before the predefined time range and then to provide and commit a second power injection schedule 15 minutes before the agreed upon dispatch time (or a predefined time range) on the basis of updated forecasts parameters.

According to an embodiment, the committed power injection schedule is guaranteed by reserving storage amount in the energy storage system. This means, that the method further comprises the step, before the predefined time range, of guaranteeing a predefined state of charge of the energy storage system on the basis of the committed power injection schedule. The predefined state of charge comprises those power reserves that are necessary to guarantee the committed power injection schedule comprising reserves for satisfying a possible reg up request, a reg down request while selling power from the energy storage system, a spinning reserve and a deep discharge reserve. A deep discharge reserve refers to an energy reserve, which should not be consumed to avoid harmful operations at low levels of the state of charge.

On the other hand, the method can also comprise the step of controlling the state of charge of the energy storage system during the predefined time range on the basis of the input signals from the controller of the grid and on the basis of at least an optimization parameter referred to a present state of charge of the energy storage system. In such a way, it is possible for the method to reserve storage capacities for absorbing energy from the energy market, for a reg down request and for a full charge reserve. A full charge reserve is a range of the state of charge, which generally should not be used, in order to avoid harmful operations of the energy storage system at high state of charge levels. In the same way, it is possible establishing a minimum stored energy reserve for injecting energy into the energy market, for "reg up" requests and for maintaining a minimum state of charge to avoid harmful deep discharge situations.

According to an embodiment, a first power injection schedule, defining the power injection of the renewable power generation equipment during the predefined time range, and a second power injection schedule, defining a power injection from the energy storage system during the predefined time range, are determined and provided separately the one from the other to the controller of the grid. In this case, the hybrid power plant is a so-called "co-located power plant". In co-located configurations, the renewable power generation equipment and the energy storage system can also share a common point of connection with the electrical grid. In this configuration, the committed power injection schedule can be an injection schedule that can be guaranteed from the energy storage system alone, while the power generated from the renewable power generation system can be used for both responding to the input signals from the controller of the grid as well for recharging the storage system.

In this case, it would be advantageous to control the usage of the generated power on the basis of a state of charge target of the energy storage system defined by, for example, a state of charge that is desired to achieve in order to maximize the amount of energy and/or storage capacity which can be offered into the reserves and regulation markets.

In the present application, a state of charge target is a target value that has to be reached or maintained at each scheduled time interval. This target value can be expressed in percentage of the total possible capacity of the energy storage system or as a physical value in Ah or the like. The state of charge target is chosen in such a way, that the lifetime of the energy storage system can be prolonged and the charging and discharging cycles of the energy storage system are minimized.

According to another embodiment, a single power injection for both the renewable power generation equipment and of the energy storage system is determined and provided to the controller of the grid. Therefore, a unique committed power injection schedule is provided for the whole plant. In this case, the hybrid power plant is a so-called "integrated power plant".

According to an embodiment, at least one type of the renewable power generation equipment comprises at least one wind turbine and/or at least a solar panel. In this case, the method allows to compensate the effects of weather conditions on the predictability of a power injection schedule, that has been committed to the controller of the grid.

Other types of renewable power generation equipment that can be comprised in the power plant include a turbine for the generation of hydroelectric power and/or a system for harvesting tidal power.

According to an embodiment, the forecasts parameters comprise weather forecast parameters, in particular wind speed, wind direction and/or sun irradiation in the region of the power plant. In particular, the weather forecasts parameters describe the weather conditions in the region of the power plant shortly before and/or during the predefined time range.

According to a further embodiment, the forecasts parameters comprise financial parameters. Financial parameters can be, for example, an energy price or a variation of an energy price in time. By considering the energy price variation over time, a financial optimization of the operation of the power plant is determined. For example, it is possible to provide a higher power supply when the energy price is high and a lower one when the energy price is low.

According to an embodiment, the forecasts parameters comprise a previously committed power injection schedule, that is a power injection schedule committed by the trader of the power plant in the past. A previously committed power injection schedule is useful for forecasting the generation and injection capabilities of the power plant on the basis of power generation and injection data collected in a time range prior to the predefined time range.

According to a further embodiment, the forecasts parameters comprise a present availability of the renewable power generation equipment.

In the present application, the availability of the renewable power generation equipment is defined as the renewable power generation equipment of the power plant, which can be used for generating power. It is for example possible, that part of the power generation equipment cannot be used shortly before and/or during the predefined time range, so that the power generation capacity of the renewable power generation equipment is reduced. By taking this into account, a more accurate power generation schedule is determined and a more accurate power injection schedule can be provided to the controller of the grid, by taking into account the future availability of the renewable power generation equipment.

According to a further embodiment, the power injection schedule is determined also on the base of a state of charge of the energy storage system.

According to a further embodiment, the controlling of the power of the power plant supplied to the point of connection is also based on a state of charge target of the energy storage system. In this case, the committed power injection schedule can be better determined and provided by also taking into account the lifetime of the energy storage system and its optimization.

According to a particular embodiment, the state of charge target comprises a minimum and/or a maximum state of charge of the energy storage system. This means, that the state of charge target has limit values, in which the energy storage system should not operate, in order to avoid damaging the energy storage system.

According to a further embodiment, the method comprises, during the predefined time range, regulating the renewable power generation by calculating control power setpoint signals that are sent to the corresponding renewable generation equipment controllers. In such a way it is possible to promptly respond to input signals from the controller of the grid and, in such a way to optimize both the financial management of the power plant as well as the lifetime management of the energy storage system.

According to a second aspect of the invention, an arrangement for managing a power plant, comprising at least one type of renewable power generation equipment, an energy storage system and at least one point of connection connecting the power plant with an electrical grid, is provided. The arrangement comprises an energy management system, a trader and a local plant controller. The energy management system configured to determine an optimized power generation schedule defining a power generation of the renewable power generation equipment and an optimized storage capacity reserve that can be offered in the reserve and regulation markets during a predefined time range on the basis of forecasts parameters. The trader is configured to provide an optimized power injection schedule defining a power injection of the power plant and available power capacities for reserve and regulation services during the predefined time range to a controller of the grid and/or market, wherein the power injection schedule is determined on the base of the power generation schedule and of at least one further forecast parameter. The trader is also configured to receive a committed power injection schedule and the committed energy and storage capacities from the controller of the grid and/or market on the basis of the power injection schedule. The local plant controller is configured to, during the predefined time range, supply a power to the point of connection on the basis of the committed power injection schedule and to control in real time the power of the power plant supplied to the point of connection on the basis of input signals received from the controller of the grid on the basis of at least one optimization parameter. The trader shall also receive the capacities committed into the reserve and regulation markets, and the local plant controller is configured to, during the predefined time range, control the power supply/increase or absorption/reduction according to the grid operator requests and the committed capacities.

The energy management system stage, also referred to as EMS, uses the power generation schedule determined on the basis of the forecasts parameters to establish feasible and predictable power injection schedules that the trader can offer to a controller of the grid and/or market. The energy management system can be configured to determine a power injection schedule to be offered on the basis of the power generation schedule and of at least one forecast parameter. This forecast parameter used in the energy management system might be directed in particular to optimizing the functioning of the power plant. For example, it might be optimal to reach and maintain a certain state of charge, within certain limits, during the predefined time range. Another objective might be charging and discharging the storage according to the market prices in order to maximize the profitability through the energy market participation (arbitrage). The power injection schedule, comprising the available capacities for the regulation and reserve markets, determined by the energy management system is then provided via the trader to the controller of the electrical grid.

In an embodiment, the energy management system is configured to update the calculation of the power injection schedule to be determined and provided as often as possible during the predefined time range. In this way, changed boundary conditions, which are fundamental for the calculation of the power injection schedule, might be considered in an appropriate way.

The calculation of the power injection schedule might be limited by the physical and/or regulatory constraints valid for the power plant, such as the maximum power that can be generated from the power plant, the energy storage maximum capacity or the minimum power that the power plant must supply for participating to the electrical grid.

The trader then provides these computed power injection schedules to the controller of the grid and/or market. The controller of the grid and/or market then responds with a committed power injection schedule, which is received from the trader. The local plant controller then supplies of the power to the point of connection according to the committed power injection schedule and controls the injection according to input signals received of the controller of the grid and to at least one optimization parameter.

The local plant controller might include a market dispatch control, which is an element of the local plant controller controlling the power supply of the power plant to the point of connection on the basis of the input signals from the controller of the grid and of at least one optimization parameter. The real time power injection or absorption setpoint is determined by the local plant controller considering the power injection schedule committed into the electricity market as well as the capacities reserved in the reserve and regulation markets, and the corresponding dispatch requests received from the grid's controller ("reg up" and "reg down" requests).

In this way, it is possible for hybrid power plants provided with storage capacity to present the characteristics of a traditional (dispatchable) power plant, where it is possible to choose the optimal future power injection and capacity reserves, while being able to actually deliver it during the predefined time range.

Additionally, and when required, a capacity firming module might be included in the energy management system. A capacity firming module is configured to optimize the committed power injection schedule received from the controller of the grid on the bases of at least one forecast and/or one optimization parameter. The optimized committed power injection schedule is then used for supplying the power of the power plant to the point of connection.

The capacity firming module of the energy management system (EMS) performs an optimization of the committed power injection schedule closer to the moment of dispatch based on the newest available power resource forecasts (forecasts parameters) and the storage's state of charge. In this case, the objective is defined as the minimization of the deviations in the power injection (or demand) regarding the committed power injection schedule, thus avoiding possible penalizations due to a non-compliance with the commitment. By considering the tolerable deviations that are allowed amid the values committed into the energy market, the optimization algorithm will take as inputs the committed power injection schedule, updated forecasts parameters and, optionally, the availability of the renewable power generation equipment and a present value of the state of charge of the energy storage system. The capacity firming module determines then an optimized power injection schedule for the predefined time range and establishes, therefore, the power injection setpoints for both the renewable power generation equipment and the energy storage system.

According to a third aspect of the present invention, a power plant with at least one arrangement according to the second aspect of the invention is provided.

It is noted, that the arrangement according to the second aspect of the present invention may include any of the features disclosed in the method according to the first aspect of the invention and that, vice versa, the method according to the first aspect of the invention may include any of the features disclosed in the arrangement according to the second aspect of the invention.

### Brief Description of the Drawing

Figure 1 shows a power plant according to an exemplary embodiment of the invention.
Figure 2 shows an arrangement according to an exemplary embodiment of the invention.
Figure 3 shows a schematically representation of a method according to the present invention.

### Detailed Description

The illustration in the drawing is schematically. It is noted that in different figures, similar or identical elements are provided with the same reference signs or with reference signs, which are different from the corresponding reference signs only within the first digit.

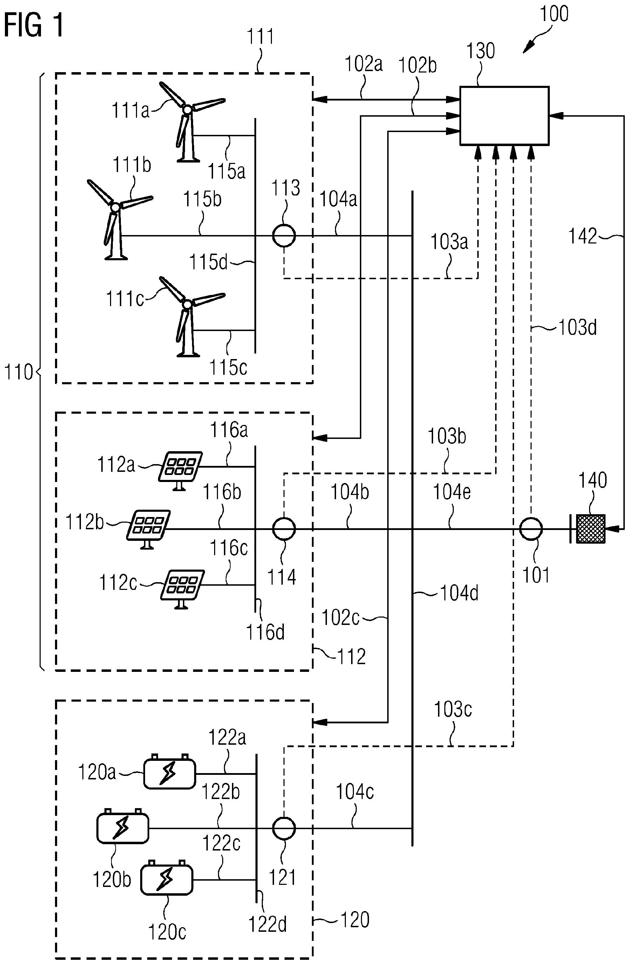

**Figure 1** shows a hybrid power plant 100 according to an embodiment of the present invention. The power plant 100 comprises renewable energy generation equipment 110, an energy storage system 120 and an arrangement 130 for managing the power plant 100. The power plant 100 is connected to an electrical grid 140 via a point of connection 101. The power plant 100 of **Figure 1** might be a co-located or an integrated power plant.

In the present embodiment, the renewable energy generation equipment 110 is of two types: on the one side there are wind turbines 111a, 111b, 111c forming a wind power plant 111 and on the other side there are solar panels 112a, 112b, 112c forming a solar energy park 112.

The wind turbines 111a, 111b, 111c are electrically connected via power lines 115a, 115b, 115c respectively to a power line 115d and through the power line 115d to a wind park connection point 113, which electrically connects the wind turbines 111a, 111b, 111c to the power lines 104a, 104d, 104e and through these to the point of connection 101, so that the electrical energy produced in the wind power plant 111 can be distributed to the grid 140.

In a similar fashion, the solar panels 112a, 112b, 112c are electrically connected via power lines 116a, 116b, 116c respectively to a power line 116d and through the power line 116d to a solar park connection point 114, which electrically connects the solar panels 112a, 112b, 112c to the power lines 104b, 104d, 104e and through these to the point of connection 101, so that the electrical energy produced in the solar energy park 112 can be distributed to the grid 140.

The energy storage system 120 includes a number of batteries 120a, 120b, 120c. These are electrically connected via power lines 122a, 122b, 122c to a power line 122d and through this to an energy storage system connection point 121. The energy storage system connection point 121 connects the energy storage system 120 with power lines 104c, 104d of the power plant 100. When the batteries are being discharged, power is supplied from the energy storage system 120 through the energy storage system connection point 121 to the power lines 104c, 104d, 104e and through these to the point of connection 101 and finally to the grid 140. When the batteries are being charged, then power is supplied from the wind power plant 111 and/or the solar energy park 112 through power lines 104d, 104c to the energy storage system connection point 121 and through this to the power lines connecting the energy storage system connection point 121 with the batteries 120a, 120b and 120c for charging them. When absorbing power from the grid, whether through the participation in the electricity market as a buyer or because of regulation requirements such as a "reg down request", in this case, the energy storage system can be charged from the grid 140 through 104e, 104d and 104c to the point of connection 121.

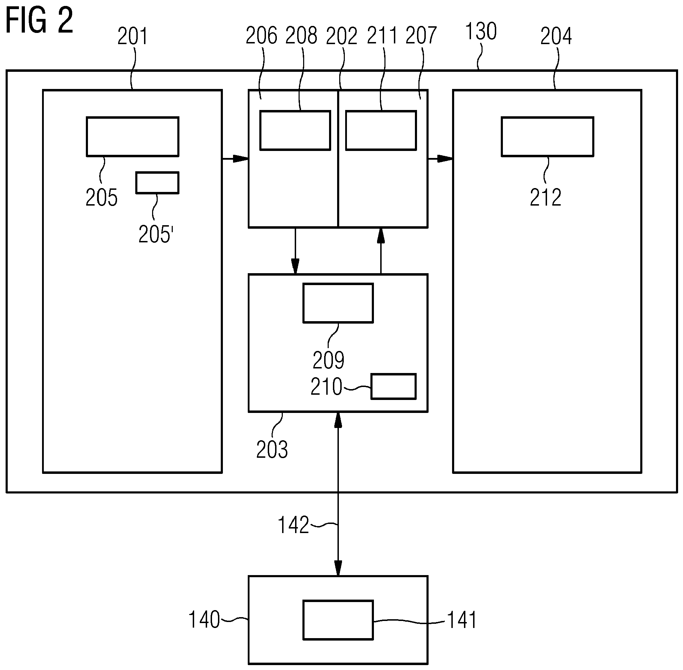

The arrangement 130, which is described in detail in **Figure 2,** controls via feedback and regulation loops, represented by the lines 102a, 102b, 102c, the wind power plant 111, the solar energy park 112 and the energy storage system 120. In particular, each of these three components of the power plant 100 are separately controlled and regulated by the arrangement 130. In particular, the arrangement 130 is configured to regulate the power through references and control signals and also to connect or disconnect any of the wind turbines 111a, 111b, 111c and/or solar panels 112a, 112b, 112c.

The arrangement 130 is also configured to regulate the power supply or completely connect or disconnect the whole wind power plant 111 and/or the whole solar energy park 112 by enabling or disabling the power distribution through the wind park connection point 113 or the solar park connection point 114. To control the wind park connection point 113 and the solar park connection point 114, dedicated signal lines 103a and 103b are provided, these signals are sent to each wind and solar generation resource's controller as power reference setpoints for each of its power regulators.

Furthermore, the arrangement 130 is configured to regulate the power flow, connect or disconnect the energy storage system 120 through references and control signals. If the energy storage system 120 is connected, then the batteries 120a, 120b, 120c can either be charged or discharged, depending on the settings provided by the arrangement 130 for controlling the energy storage system connection point 121. The arrangement 130 controls the energy storage system connection point 121 via a dedicated signal line 103c. It might also be the case, that one or more batteries are connected and one or more are disconnected, so that the batteries 120a, 120b, 120c can be controlled separately by the arrangement 130. Also, the arrangement 130 is configured to control the point of connection 101 via a dedicated signal line 103d.

It is herewith specified, that each of the connection points 113, 114, 121 and the point of connection 101 are not only for fully connecting or fully disconnecting two power lines or the power line 104e and the grid 140, but that they can also partially connect or partially disconnect two power lines or the power line 104e and the grid 140, thus allowing a reduced amount of electrical power to be transmitted through it. Besides the connection and disconnection of the power lines, the signals transmitted through 103a, 103b, 103c are sent to each wind, solar generation and storage resource's controller as power reference setpoints for each of its power regulators. This control is made through power setpoint references sent to the devices and measurements taken at the points of connection.

From **Figure 1** it is clear, how the arrangement 130 controls the whole power plant 100 and the power supply of the same to the point of connection 101. The supplied power and its composition, being the sum of the power generated by the renewable energy generation equipment 110 and the power from the energy storage system 120, is also controlled by the arrangement 130 with the aim of meeting a power injection schedule committed into the electricity market and control the supplied power on the basis of input signals received from the controller of the grid 141 and of at least one optimization parameter. The communication between the controller of the grid 141 and the arrangement 130 is performed via a signal line 142.

**Figure 2** shows the arrangement 130 in a detailed manner. The arrangement 130 comprises a forecast service system 201, an energy management system 202, a trader 203 and a local plant controller 204.

The forecast service system 201 retrieves forecasts parameters 205, such as weather forecast data, from sources which are external to the arrangement 130, such as authorized forecast service providers. The forecasts parameters 205 are then passed to the energy management system 202. The forecasts parameters 205 can include a power generation forecast on the basis of weather forecast parameters (natural forecast), a price forecast for the energy price (financial forecast) or a state of charge objective (time shifting) of the energy storage system 120

The energy management system 202 comprises a bid forecast calculation unit 206 and a capacity firming module 207. The bid forecast calculation unit 206 determines a power generation schedule 208 on the basis of the forecasts parameters 205.

The trader 203 calculates, in a successive step, a possible power injection schedule 209 on the basis of the power generation schedule 208 and provides to a controller of the grid and/or the market 141 a power injection schedule to be committed, including the capacities offers for the regulation and reserves market. The trader 203 receives from the same a committed power injections schedule 210, which defines the power amount that has to be injected and/or absorbed to/from the point of connection 101 during the predefined time range, and the committed capacities for regulation and reserves markets.

The committed power injection schedule 210 is optimized closer to the moment of the dispatch in the capacity firming module 207, which calculates an optimized power injection schedule 211, which takes into consideration updated forecasts parameters 205' and at least one optimization parameter of the power plant 100, such as the minimization of the power curtailment during the predefined time range or the maximization of the lifetime of the energy storage system 120. The optimized power injection schedule 211 takes into consideration the tolerance boundaries allowed by the controller of the grid and/or market 141 on the deviation from the power committed in the committed power injection schedule 210.

The optimized power injection schedule 211 is transmitted to the local plant controller 204, which elaborates it into a dispatch control schedule 212. This dispatch control schedule 212 is used for, on the one side, dispatching the power to the point of connection 201 according to the optimized power injection schedule 211 and, on the other hand, to control the power supplied to the point of connection 101 according to input signals received in real time from the controller of the grid 141 and on the basis of at least one optimization parameter.

The input signals from the controller of the grid 141 are transmitted to the local plant controller 204 of the arrangement 130 via the signal line 142. The input signals might comprise a request for a power supply increase or decrease during the predefined time range. The input signals may also comprise a request to use reserve capacities for stabilizing the frequency of the electrical grid 140.

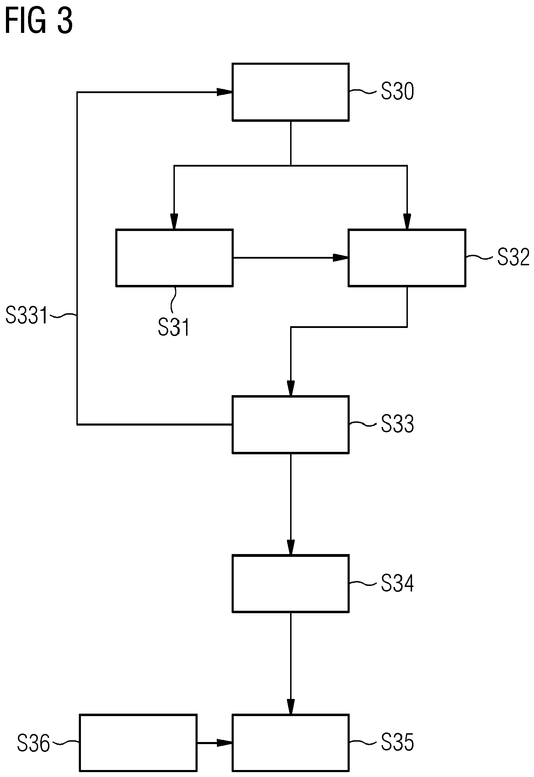

**Figure 3** shows, schematically, a method of power management of the power plant 100 according to the invention.

In a first step S30 forecasts parameters 205 are collected from the forecast service system 201.

The forecasts parameters 205 can be of different types. It is for example possible, that the forecasts parameters 205 are weather forecasts data for the region in which the power plant 100 is situated. For example, the forecasts parameter 205 can relate to wind speed, wind direction, precipitations and/or solar irradiation. If the renewable energy generation equipment 110 comprises a system for harvesting tidal energy, the forecasts parameters 205 can also provide information about the tides.

The forecasts parameters 205 can however also relate to financial data, such as the energy price, and/or to parameters providing information about the energy market, such as a previously committed power injection schedule.

Also, the forecasts parameters 205 can provide information about the power plant 100. In particular, the forecasts parameters 205 can relate to the state of charge of the energy storage system 120 and/or to the availability of one or more parts of the renewable energy generation equipment 110.

The forecasts parameters 205 can relate to a present time range. It is however preferable, that the forecasts parameters 205 relate to information during the predefined time range.

In a second step S31, the energy management system 202 determines a power injection schedule 208 by means of the bid forecast calculation module 206 on the basis of the forecasts parameters 204 for the predefined time range.

In a third step S32, the bid forecast calculation module 206 of the energy management system 202 determines a power injection schedule 209 on the basis of the power generation schedule 208 and of at least one forecast parameter. The power injection schedule 209 is used by the trader 203 to provide to the controller of the grid and/or market 141 a power injection schedule to be committed for the predefined time range (step S33). The result of this negotiation process is a committed power injection schedule 210, which the trader 203 receives from the controller of the grid and/or market 141.

The committed power injection schedule 211 can be transmitted to the forecast service system 201, which uses it as a forecast parameter 204 for determining a future power generation schedule (step S331).

The committed power injection schedule 210 is transmitted to the capacity firming module 207 of the energy management system 202. The capacity firming module 207 elaborates in step S34 an optimized power injection schedule 211, which takes into account the committed power injection schedule 210, updated forecasts parameters 205', any possible constraint imposed by the controller of the grid 141, such as a maximum suppliable power, and at least one optimization parameter.

The optimized power injection schedule 211 is used by the local plant controller 204 to inject the power of the power plant 100 to the point of connection 101 accordingly (step S35) and to control the power supply on the basis of input signals received from the controller of the grid 141 (step S36) and of at least one optimization parameter.

It is for example possible, that, in order to maximize the lifetime of the energy storage system 120, the composition of the power supplied to the point of connection from the renewable power generation equipment 110 on the one side and from the energy storage system 120 on the other side it is adapted to reach an optimal state of charge of the energy storage system 120, while the amount of the power supplied is constant and equal to that foreseen in the optimized power injection schedule 211. Such state of charge might have a minimum and/or a maximum level, so that the state of charge does not drop below and/or excess an amount.

According to an embodiment of the method, updated parameters 205' are collected at regular or irregular intervals during the predefined time range, so that the managing of the power plant 100 can be adapted to mutable conditions. If this is the case, then the steps S30 to S36 are repeated.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. Method of power management of a hybrid power plant (100) comprising at least one type of renewable power generation equipment (110) and an energy storage system (120), wherein the power plant (100) comprises at least one point of connection (101) with an electrical grid (140), wherein the method comprises:
determining an optimized power generation schedule (208) defining a power generation of the renewable power generation equipment (110) during a predefined time range and an optimized storage capacity reserve defining an amount of available energy and power from the energy storage system (120) during the predefined time range on the basis of forecasts parameters (205);
providing an optimized power injection schedule and available capacities for reserve and regulation services (209) defining a power injection and available capacities for reserve and regulation services of the power plant (100) during the predefined time range to a controller of the grid and/or market (141), wherein the power injection schedule (209) is determined on the basis of the power generation schedule (208) and of at least one further forecast parameter (205);
receiving a committed power injection schedule and capacities for reserve and regulation services (210) from the controller of the grid and/or market (141) on the basis of the power injection schedule (209);
wherein in the predefined time range the method comprises:
supplying the power of the power plant (100) to the point of connection (101) on the basis of the committed power injection schedule (210) and
controlling in real time the power of the power plant (100) supplied to the point of connection (101) on the basis of input signals received from the controller of the grid (141) and of at least one optimization parameter.

2. Method according to claim 1, wherein the input signal from the controller of the grid (141) is a power supply increase.

3. Method according to claim 2, wherein during the power supply increase a state of charge of the energy storage system (120) is increased.

4. Method according to any of the preceding claims, wherein the input signal from the controller of the grid (141) is a power supply decrease.

5. Method according to claim 4, wherein during the power supply decrease, a state of charge of the energy storage system (120) is reduced.

6. Method according to any of the preceding claims, wherein a first power injection schedule, defining the power injection of the renewable power generation equipment (110) during the predefined time range, and a second power injection schedule, defining a power injection from the energy storage system (120) during the predefined time range, are determined and provided separately the one from the other to the controller of the grid (141).

7. Method according to any of the preceding claims, wherein the forecasts parameters (205) comprise weather forecast parameters, in particular wind speed, wind direction and/or sun irradiation in the region of the power plant (100).

8. Method according to any of the preceding claims, wherein the forecasts parameters (205) comprise financial parameters.

9. Method according to any of the preceding claims, wherein the forecasts parameters (205) comprise a present availability of the renewable power generation equipment (110).

10. Method according to any of the preceding claims, wherein the power injection schedule (209) is determined also on the basis of a state of charge of the energy storage system (120) .

11. Method according to any of the preceding claims, wherein the controlling of the power of the power plant (100) supplied to the point of connection (101) is also based on a state of charge target of the energy storage system (120).

12. Method according to claim 11, wherein the state of charge target comprises a minimum and/or a maximum state of charge of the energy storage system (120).

13. Method according to any of the preceding claims, wherein, during the predefined time range, the method further comprises:
activating and/or deactivating at least a part of the renewable power generating equipment (110).

14. Arrangement (130) for managing a hybrid power plant (100), comprising at least on type of renewable power generation equipment (110), an energy storage system (120) and at least one point of connection (101) connecting the power plant (100) with an electrical grid (140), the arrangement comprising:
an energy management system (202) configured to:
determine an optimized power generation schedule (208) defining a power generation of the renewable power generation equipment (110) and an optimized storage capacity reserve defining an amount of available power to and from the energy storage system (120) during the predefined time range during a predefined time range on the basis of forecasts parameters (205);
a trader (203) configured to:
provide an optimized power injection schedule (209) defining a power injection (100) and available capacities for reserve and regulation services during the predefined time range to the controller of the grid and/or market (141), wherein the power injection schedule (209) is determined on the base of the power generation schedule (208) and of at least one further forecast parameter (205); and
receive a committed power injection schedule and the committed energy and storage capacities (210) from the controller of the grid and/or market (141) on the basis of the power injection schedule (209);
a local plant controller (204) configured to, during the predefined time range:
supply a power to the point of connection (101) on the basis of the committed power injection schedule (210); and
control in real time the power of the power plant (100) supplied to the point of connection (101) in real time on the basis of input signals received from the controller of the grid (141) and of at least one optimization parameter.

15. Hybrid power plant (100) comprising at least an arrangement (130) according to claim 14.
